# EUROPÄISCHE PATENTSCHRIFT

(11) **EP 1 104 852 B1**
(45) Veröffentlichungstag und Bekanntmachung des Hinweises auf die Patenterteilung: **16.10.2002**
(21) Anmeldenummer: 00125561.1
(22) Anmeldetag: 22.11.2000
(51) Int. Cl.: F16B 5/06, F16B 21/07, F16F 1/373

(54) **Schwingungsdämpfende lösbare Verbindungsanordnung für zwei Bauteile mit einem Drehbolzen, einer Haltefeder und einem Schwingungsdämpferring**
Vibration damping device for detachably connecting two parts with a rotatable pin a retaining spring and a vibration dampening ring
Dispositif de fixation detachable de deux pieces antivibratoire avec une goupille, un ressort de retenue et un anneau antivibratoire

(30) Priorität: 23.11.1999 DE 29920497 U
(43) Veröffentlichungstag der Anmeldung: 06.06.2001
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- EP-A- 0 791 759
- DE-U- 29 716 096
- GB-A- 1 517 823
- US-A- 2 200 702
- US-A- 4 921 371

## Beschreibung

Die Erfindung betrifft eine schwingungsdämpfende lösbare Verbindungsanordnung für zwei Bauteile mit einem Drehbolzen, einer Haltefeder und einem Schwingungsdämpferring.
Eine solche Verbindungsanordnung hat neben dem schnellen Verbindungsaufbau den Vorteil der einfachen Demontage für Wartungsarbeiten und Reparaturen. Derartige Anordnungen werden vorzugsweise in Flugzeugen und Kraftfahrzeugen zur Befestigung von Innenverkleidungen benutzt.
Nach dem Stand der Technik ist aus dem deutschen Gebrauchsmuster 297 16 096.6 ein Schnellverschluß zum Verbinden zweier Teile bekannt, bei dem mit einem ersten Teil ein am freien Ende zugespitzter mit seitlichen Kerben versehener Bolzen und mit einem zweiten Teil eine Haltefeder verbunden ist, deren zwei federnde Enden in die Kerben eingreifen, wobei der Bolzen fest mit dem ersten Teil verbunden ist und die Haltefeder um die Bolzenachse verdrehbar am zweiten Teil befestigt ist.

Desweiteren ist aus dem deutschen Gebrauchsmuster 296 033 89.8 ein Schnellverschluß zum Verbinden von mit Bohrungen versehenen Teilen bekannt, der aus einem Bolzen mit Kerben und einer Haltefeder besteht, wobei die Verbindung dadurch herstellbar ist, daß die Kerben des Bolzens in die federnden Enden der Haltefeder eingeschoben werden und die Verbindung dadurch lösbar ist, daß der Bolzen z.B. mittels eines Schraubendrehers gedreht wird.
In einer weiteren Ausgestaltung dieses Verschlusses ist zwischen den Teilen und dem Bolzen ein verformbarer Gummiring angeordnet.

Bei den Schnellverschlüssen der vorgenannten Art werden jedoch in einem Teil unerwünscht auftretende Schwingungen direkt oder über den Schnellverschluß auf das andere Teil übertragen.

Zur Vermeidung dieses Nachteils ist es Aufgabe der Erfindung, einen Schnellverschluß mit Drehbolzen und Haltefeder vorzusehen, der eine Schwingungsdämpfung gewährleistet.

Diese Aufgabe der Erfindung wird in vorteilhafter Weise durch die im kennzeichnenden Teil der Ansprüche 1 und 2 genannten Merkmale gelöst.

Vorteilhafte Weiterbildungen sind in den Unteransprüchen gekennzeichnet.

Ausführungsbeispiele der Erfindung sind in den Zeichnungen dargestellt und werden im folgenden näher beschrieben.

Es zeigen
FIG.1
   eine perspektische Darstellung des über einen Schwingungsdämpferringes mit dem ersten Bauteil verbundenen Bolzens,
FIG. 2
   eine perspektivische Darstellung der zweiarmigen am zweiten Bauteil befestigten Haltefeder;
FIG. 3
   eine schematische Schnittdarstellung aller Elemente der Verbindungsanordnung ,
FIG.4
   eine perspektivische Darstellung des Schwingungsdämpferringes.
FIG. 5
   eine schematische Schnittdarstellung einer anderen Ausführungsform der Erfindung.

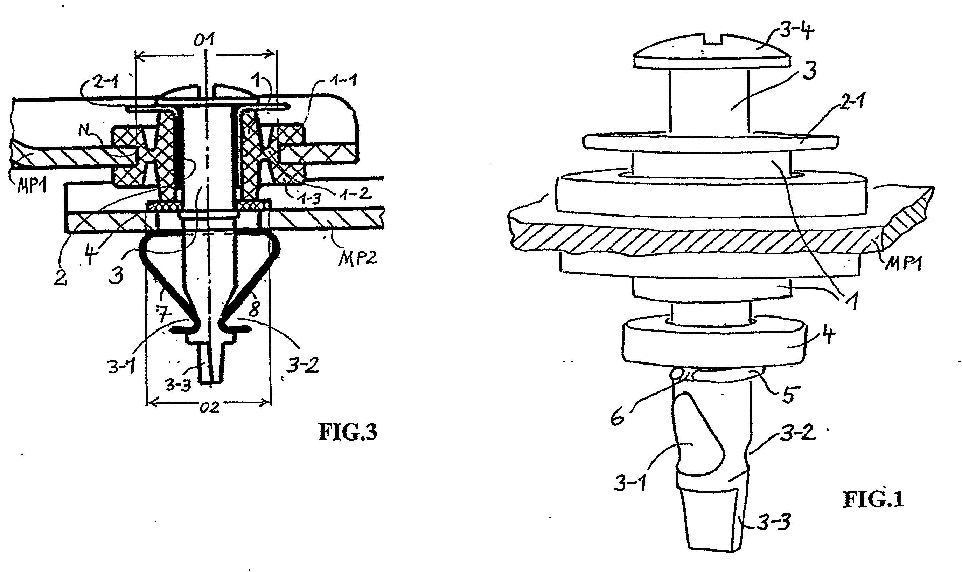

Dieselben Teile in den Darstellungen FIG. 1 bis 4 tragen dieselben Bezeichnungen:
Das mit dem zweiten Bauteil MP2 zu verbindende erste Bauteil ist mit MP1 bezeichnet.
Bei der Verbindung ist eine Bohrung O1 im ersten Bauteil MP1 auf eine Bohrung O2 im zweiten Bauteil MP2 ausgerichtet. In der Bohrung O1 ist der Schwingungsdämpferring 1 angeordnet.

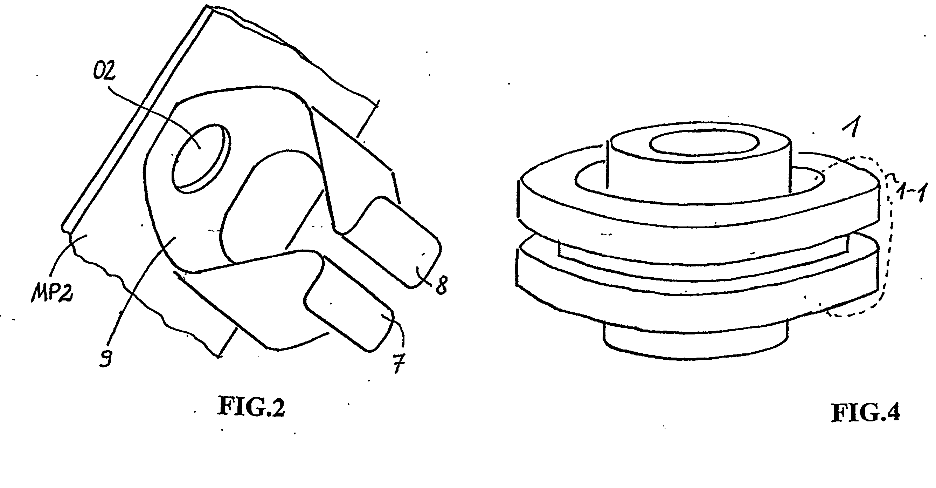

Der Schwingungsdämpferring 1 (s. auch FIG. 3 und FIG. 4 ) weist einen peripheren Wulst 1-1 mit einem Hals-(1-2) und einem Kopfteil 1-3 auf. Im Kopfteil 1-3 ist eine Nut N zur Aufnahme des Randes der Bohrung O1 im ersten Bauteil MP1 vorgesehen.
In der Ringöffnung ist eine Buchse 2 mit einem auf der Oberseite des Schwingungsdämpferringes aufliegenden Auflagerand 2-1 angeordnet. In der Buche 2 ist der Drehbolzen 3 geführt; dieser erstreckt sich durch die Öffnung O1 im ersten MP1 und durch die Öffnung O2 im zweiten Bauteil MP2. Auf dem Bolzen ist eine Ringscheibe 4 verschieblich angeordnet. Sie ist (FIG. 1) - bei fehlendem zweiten Bauteil -zwischen dem unteren Rand des Schwingungsdämpferringes 1 und einem als Anschlag dienenden Federring 5, welcher in der Bolzen-Nut 6 angeordnet ist, verschiebbar.
Bei miteinander verbundenen Bauteilen MP1 und MP2 (FIG.3) liegt diese Ringscheibe 4 direkt zwischen dem unteren Rand des Schwingungsdämpferringes und dem Federring 5. Die Scheibe 4 ermöglicht auch eine seitliche Verschiebung der Verbindungsanordnung auf dem zweiten Bauteil MP2.

Am unteren Teil weist der Bolzen zwei Eingriffsaussparungen (Kerben) 3-1 und 3-2 auf. Sie dienen dem die Bauteile MP1 und MP2 verbindenden Eingriff der Enden der Federarme 7 und 8. Die (Halte)-Federanordnung 9 ist separat in FIG. 2 gezeigt. Sie ist fest (z.B. durch Nieten) mit der Unterseite des zweiten Bauteiles MP2 verbunden und weist zwei freie Arme 7 und 8 auf, die an ihren Enden einander zugeneigt sind . Die Enden der Arme sind leicht nach außen gebogen, passend für einen kraft- und formschlüssigen Sitz in den Eingriffsaussparungen 3-1 und 3-2 und passend für ein Lösen des Eingriffs.

Die Bolzenspitze 3-3 ist keilförmig ausgebildet.
Zum Lösen der Verbindung wird der Drehbolzen 3 mittels eines an seinem Kopf anzusetzenden Schraubendrehers um ca. 90 Grad gedreht. Dabei werden die Blattfederenden auseinandergespreizt auf ein dem Bolzendurchmesser entsprechendes Maß. In dieser entriegelten Position (der Eingriff der Blattfederenden in den seitlichen Eingriffs-Aussparungen 3-1 und 3-2 ist gelöst) kann das Bauteil MP1 samt Schwingungsdämpferring und Bolzen aus der geöffneten Haltefederanordnung 9, welche mit dem Bauteil MP2 verbunden ist, herausgezogen werden. Da der Bolzen leicht konisch ausgeführt ist, rutscht er selbsttätig aus der gespreizten Haltefeder heraus und signalisiert damit sichtbar eine gelöste Verbindung.

Um die Bauteile MP1 und MP2 wieder miteinander zu verbinden, wird der Bolzen 3 durch die Öffnung O2 des zweiten Bauteils MP2 hindurchgesteckt und mit der Schmalseite seiner keilförmigen Spitze 3-3 zwischen den sich dabei spreizenden Blattfederenden hindurchgeschoben, bis diese schließlich in die Eingriffsaussparungen einrasten.

Der Schwingungsdämpferring dient aufgrund seiner Elastizität zugleich auch dem Ausgleich der Toleranzen der zu verbindenden Bauteile.
Für einen solchen Toleranzausgleich wurden bei Verbindungsanordnungen nach dem Stand der Technik (ohne Schwingungsdämpferring) zusätzliche Druckfedern verwendet, die nun bei der erfindungsgemäßen Anordnung entfallen können.

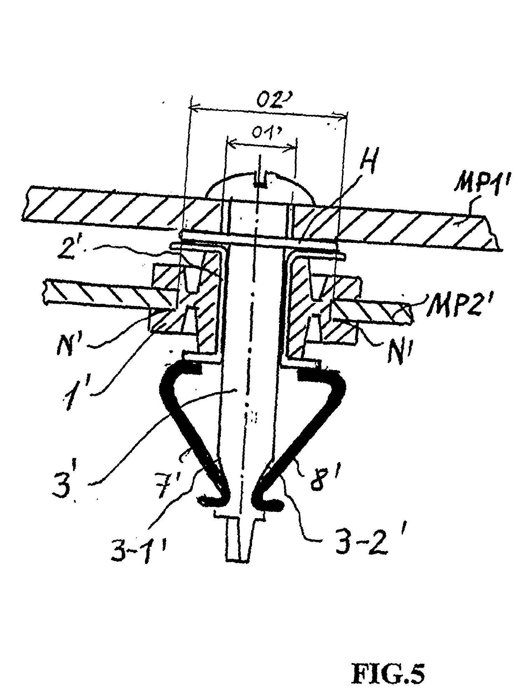

FIG. 5 zeigt
eine schematische Schnittdarstellung einer anderen Ausführungsform der Erfindung, bei der das erste Bauteil MP1' über dem Schwingungsdämpferring 1' angeordnet und das zweite Bauteil MP2' in der peripheren Nut N' des Schwingungsdämpferringes 1' gehalten wird.
Die Öffnungen O1' des ersten Bauteils, des Schwingungsdämpferringes und O2' des zweiten Bauteils MP2' sind aufeinander bezüglich einer gemeinsamen Achse ausgerichtet. In der Öffnung des Schwingungsdämpferringes 1' ist eine Hülse 2' angeordnet, in welcher der Drehbolzen 3' geführt ist.
zwischen dem oberen Hülsenrand und dem ersten Bauteil MP1' ist am Bolzen 3' ein Haltering H aus elastischen Material befestigt.
Er dient der Sicherung des Bolzens gegen Herausfallen aus dem Bauteil MP1' (solange die Verbindung beider Bauteile nicht hergestellt ist) und auf grund seines federnden Materials einem Toleranzausgleich, z.B. bei differierenden Stärken der Bauteile.
Die Haltefedern 7' und 8' greifen mit ihren freien federnden Enden in die Aussparungen 3-1' und 3-2' des Bolzens ein. Ihre festen Enden sind entweder fest (z.B. durch Vernieten, Verkleben, Verschrauben) mit dem unteren Hülsenrand verbunden. Sie können aber auch in der Hülsenwandung verklemmt sein, z.B. wenn die Hülse mit ihrem oberen und unteren Rand die Innenwandung des Schwingungsdämpferringes übergreift und im unteren Bereich eine Ausnehmung zum Einklemmen des (festen) Federendes aufweist (nicht dargestellt). Darüberhinaus ist es auch möglich, die festen Blattfederenden im Schwingungsdämpferring einzubetten (z.B. durch Einvulkanisieren, Vergießen).
An der den Bauteilen (MP1', MP2') abgewandten Seite des Schwingungsdämpferringes (1') sind anschlagbildende Mittel bezüglich der Öffnung (O2') des zweiten Bauteils (MP2') vorgesehen. Diese Mittel , z.B. die Haltefeder-Anordnung, verhindern, daß bei Extrembelastung die Verbindungsanordnung aus der Öffnung O1' herausgezogen werden kann.

## Patentansprüche

1. Verbindungsanordnung zum lösbaren Verbinden zweier mit aufeinander ausgerichteten Öffnungen versehener Bauteile, bei der mit dem ersten Bauteil ein am freien Ende zugespitzter mit zwei seitlichen Kerben versehener um seine Achse drehbarer Bolzen in Verbindung steht,
und bei der mit dem zweiten Bauteil eine Haltefeder verbunden ist,
deren zwei federnde Enden in die Kerben eingreifen,
wobei der Teil des Bolzens mit den Kerben durch die Öffnung des zweiten Bauteils hindurchragt,
**dadurch gekennzeichnet,**
**daß** ein Schwingungsdämpferring (1) vorgesehen ist,
welcher eine periphere Nut (N) aufweist,
in welcher der Rand einer Öffnung (O1) des ersten Bauteils (MP1) anordnungsbar ist,
**daß** in der Öffnung des Schwingungsdämpfferringes (1) eine Buchse (2) angeordnet ist,
**daß** in der Buchse (2) der Bolzen (3) geführt ist,
**daß** auf dem Bolzen (3) ein verschieblicher Ring (4) angeordnet ist, dessen äußerer Durchmesser kleiner als der Durchmesser der Öffnung (O1) des ersten Bauteils (MP1) und
größer als der Durchmesser der Öffnung (O2) des zweiten Bauteils (MP2) ist,
und **daß** dieser Ring (4) bei geschlossener Verbindungsanordnung zwischen der Unterseite des Schwingungsdämpferringes (1) und der Oberseite des zweiten Bauteils (MP2) angeordnet ist.

2. Verbindungsanordnung zum lösbaren Verbinden zweier mit aufeinander ausgerichteten Öffnungen versehener Bauteile, bei der mit dem ersten Bauteil ein am freien Ende zugespitzter mit zwei seitlichen Kerben versehener um seine Achse drehbarer Bolzen in Verbindung steht,
und bei der eine Haltefeder vorgesehen ist,
deren zwei federnde Enden in die Kerben eingreifen,
wobei der Teil des Bolzens mit den Kerben durch die Öffnung des zweiten Bauteils hindurchragt,
**dadurch gekennzeichnet,**
**daß** ein Schwingungsdämpferring (1') vorgesehen ist,
welcher eine periphere Nut (N') aufweist,
**daß** über dem Schwingungsdämpferring (1') das erste Bauteil (MP1') anordnungsbar ist,
**daß** in der Nut (N') des Schwingungsdämpferringes (1') der Rand einer Öffnung (O2') des zweiten Bauteils (MP2') aufnehmbar ist,
**daß** in der Öffnung des Schwingungsdämpfferringes (1) eine Buchse (2') angeordnet ist,
**daß** in der Buchse (2') der Bolzen (3') geführt ist und
**daß** die Haltefeder (7',8') auf der den Bauteilen (MP1', MP2') abgewandten Seite des Schwingungsdämpferringes mit dem Schwingungsdämpferring (1') oder der Buchse (2')verbunden ist.

3. Anordnung nach Anspruch 2,
**dadurch gekennzeichnet, daß**
am Bolzen zwischen dem gedachten ersten Bauteil (MP1') und dem Schwingungsdämpferring (1') ein Haltering (H) angeordnet ist.

4. Anordnung nach Anspruch 3;
**dadurch gekennzeichnet, daß**
der Haltering(H) aus elastischem Material ist.

5. Anordnung nach einem der Ansprüche 2-4,
**dadurch gekennzeichnet, daß**
an der den Bauteilen (MP1', MP2') abgewandten Seite des Schwingungsdämpferringes (1') anschlagbildende Mittel bezüglich der Öffnung (O2') des zweiten Bauteils (MP2') vorgesehen sind.

6. Anordnung nach Anspruch 2,
**dadurch gekennzeichnet, daß**
die Haltefedern (7', 8') durch Einbetten (z.B. Einvulkanisieren oder Vergießen) im Schwingungsdämpferring (1') mit diesem verbunden ist.

7. Anordnung nach Anspruch 2,
**dadurch gekennzeichnet, daß**
die Haltefedern (7',8') mit der Hülse (2') im Bereich der den Bauteilen (MP1', MP2') abgewandten Seite des Schwingungsdämpferringes (1') durch Vernieten, Verkleben o.ä. fest verbunden sind.

8. Anordnung nach Anspruch 2,
**dadurch gekennzeichnet, daß**
die Haltefedern (7',8') im Bereich der den Bauteilen (MP1', MP2') abgewandten Seite des Schwingungsdämpferringes (1') mit einer die Innenwandung des Schwingungsdämpferinges (1') übergreifenden Hülsenklemmhalterung verbunden sind.

9. Anordnung nach Anspruch 1,
**gekennzeichnet durch**
einen Anschlag (5) am Bolzen (3) für den Ring(4).

10. Anordnung nach Anspruch 9,
**dadurch gekennzeichnet, daß**
dieser Anschlag ein in einer Bolzennut(6) angeordneter Federring (5) ist.

11. Anordnung nach Anspruch 1 oder 2,
**dadurch gekennzeichnet, daß**
bei einer Verdrehung des Bolzens (3) die Haltefeder (7,8;7',8') enden durch den aussparungsfreien Bereich des Bolzens seitlich der Aussparungen (3-1, 3-2; 3-1',3-2') spreizbar sind.

12. Anordnung nach Anspruch 1 oder 2,
**dadurch gekennzeichnet, daß**
die Buchse (2, 2') einen auf der Oberseite des Schwingungsdämpfferringes (1, 1') aufliegenden Rand (2-1, 2-1') aufweist, auf welchem der Bolzenkopf (3-4) bzw. der Haltering (4) aufliegt.

## Claims

1. Connection arrangement for the detachable connection of two components with openings aligned towards one another, where a bolt which rotates around its own axis, which is pointed towards its free end, and which has two lateral notches, is in connection with the first component, and where a retaining spring whose two spring-loaded ends hook into the notches, is connected with the second component, and where the part of the bolt with the notches projects through the opening of the second component,
**characterised in that**
a vibration-damping ring (1) with a peripheral groove (N) is provided, in which the edge of an opening (O1) of the first component (MP1) can be located,
that a bush (2) is located in the opening of the vibration-damping ring (1),
that the bolt (3) is guided in the bush (2)
that a movable ring (4), whose outer diameter is smaller than the diameter of the opening (O1) of the first component (MP1) and larger than the diameter of the opening (O2) of the second component (MP2) is arranged on the bolt (3),
and that, when the connection arrangement is closed, this ring (4) is located between the lower side of the vibration-damping ring (1) and the upper side of the second component (MP2).

2. Connection arrangement for the detachable connection of two components with openings aligned towards one another, where a bolt which rotates around its own axis, which is pointed towards its free end, and which has two lateral notches, is in connection with the first component, and where a retaining spring is provided, whose two spring-loaded ends hook into the notches,
where the part of the bolt with the notches projects through the opening of the second component,
**characterised in that**
a vibration-damping ring (1') with a peripheral groove (N') is provided, which can be located above the vibration-damping ring (1') of the first component (MP1'),
that the edge of the opening (O2') of the second component (MP2') can be received in the groove (N') of the vibration-damping ring (1'),
that a bush (2') is located in the opening of the vibration-damping ring (1),
that the bolt (3') is guided in the bush (2'),
and that the retaining spring (7', 8') on the side of the vibration-damping ring turned away from the components (MP1', MP2') is connected with the vibration-damping ring (1') or the bush (2').

3. Arrangement in accordance with claim 2,
**characterised in that**
a retaining ring (H) is arranged on the bolt between the proposed first component (MP1') and the vibration-damping ring (1').

4. Arrangement in accordance with claim 3,
**characterised in that**
the retaining ring (H) is of elastic material.

5. Arrangement in accordance with claims 2-4
**characterised in that**
means of forming a stop with reference to the opening (O2') of the second component (MP2') are provided on the side of the vibration-damping ring (1') turned away from the components (MP1', MP2').

6. Arrangement in accordance with claim 2
**characterised in that**
that the retaining springs (7', 8') are connected with the vibration-damping ring (1') by embedding (e.g. by vulcanising or casting in).

7. Arrangement in accordance with claim 2
**characterised in that**
the retaining springs (7', 8') are permanently connected with the bush (2') in the area of the side of the vibration-damping ring (1') turned away from the components (MP1', MP2') by means of riveting, adhesive bonding etc.

8. Arrangement in accordance with claim 2
**characterised in that**
the retaining springs (7', 8') in the area of the side of the vibration-damping ring (1') turned away from the components (MP1', MP2') are connected with a bush clamping holder hooking over the inner wall of the vibration-damping ring (1').

9. Arrangement in accordance with claim 1
**characterised by**
a stop (5) on the bolt (3) for the ring (4).

10. Arrangement in accordance with claim 9
**characterised in that**
this stop is a lock washer (5) located in a groove of the bolt (6)

11. Arrangement in accordance with claim 1 or 2
**characterised in that**
when the bolt (3) is turned, the retaining-spring (7, 8; 7', 8') ends can be expanded by the area of the bolt without recesses located at the side of the recesses (3-1, 3-2; 3-1', 3-2').

12. Arrangement in accordance with claim 1 or 2
**characterised in that**
the bush (2, 2') has an edge (2-1, 2-1') which lies against the upper side of the vibration-damping ring (1, 1') and against which the head of the bolt (3-4) or the retaining ring (4) lies.

## Revendications

1. Dispositif d'assemblage pour l'assemblage amovible de deux éléments de construction pourvus d'ouvertures orientées l'une vers l'autre, dans lequel le premier élément de construction est relié à un goujon pointu à son extrémité libre, pourvu de deux encoches latérales et pouvant tourner sur son axe, et dans lequel le deuxième élément de construction est relié à un ressort de maintien dont les deux extrémités élastiques se mettent en prise dans les encoches, la partie du goujon pourvue des encoches pénétrant dans l'ouverture du deuxième élément de construction,
**caractérisé en ce qu'**il est prévu une bague amortissant les vibrations (1) qui présente une gorge périphérique (N) destinée à recevoir le bord d'une ouverture (O1) du premier élément de construction (MP1),
**en ce qu'**une douille (2) est disposée dans l'ouverture de la bague amortissant les vibrations (1),
**en ce que** le goujon (3) est guidé dans la douille (2),
**en ce qu'**une bague coulissante (4), dont le diamètre extérieur est plus petit que le diamètre de l'ouverture (O1) du premier élément de construction (MP1) et plus grande que le diamètre de l'ouverture (O2) du deuxième élément de construction (MP2), est disposée sur le goujon (3),
et **en ce que** cette bague (4) est disposée, lorsque le dispositif d'assemblage est fermé, entre la face inférieure de la bague amortissant les vibrations (1) et la face supérieure du deuxième élément de construction (MP2).

2. Dispositif d'assemblage pour l'assemblage amovible de deux éléments de construction pourvus d'ouvertures orientées l'une vers l'autre, dans lequel le premier élément de construction est relié à un goujon pointu à son extrémité libre, pourvu de deux encoches latérales et pouvant tourner sur son axe, et dans lequel est prévu un ressort de maintien dont les deux extrémités élastiques se mettent en prise dans les encoches, la partie du goujon pourvue des encoches pénétrant dans l'ouverture du deuxième élément de construction,
**caractérisé en ce qu'**il est prévu une bague amortissant les vibrations (1') qui présente une gorge périphérique (N'),
**en ce que** le premier élément de construction (MP1') peut être disposé par-dessus la bague amortissant les vibrations (1'),
**en ce que** le bord d'une ouverture (O2') du deuxième élément de construction (MP2') peut être logé dans la gorge (N') de la bague amortissant les vibrations (1'),
**en ce qu'**une douille (2') est disposée dans l'ouverture de la bague amortissant les vibrations (1'),
**en ce que** le goujon (3') est guidé dans la douille (2'),
et **en ce que** le ressort de maintien (7', 8') est relié avec la bague amortissant les vibrations (1') ou la douille (2') sur la face de la bague amortissant les vibrations située à l'opposée des éléments de construction (MP1', MP2').

3. Dispositif selon la revendication 2, **caractérisé en ce qu'**une bague de maintien (H) est disposée sur le goujon entre le premier élément de construction (MP1') et la bague amortissant les vibrations (1').

4. Dispositif selon la revendication 3, **caractérisé en ce que** la bague de maintien (H) est faite d'un matériau élastique.

5. Dispositif selon l'une quelconque des revendications 2 à 4, **caractérisée en ce que** des moyens formant butée sont prévus sur la face de la bague amortissant les vibrations orientée à l'opposé des éléments de construction (MP1', MP2') par rapport à l'ouverture (O2') du deuxième élément de construction (MP2').

6. Dispositif selon la revendication 2, **caractérisé en ce que** les ressorts de maintien (7', 8') sont assemblés avec la bague amortissant les vibrations (1') par inclusion dans celle-ci (par exemple par vulcanisation ou lors du moulage).

7. Dispositif selon la revendication 2, **caractérisé en ce que** les ressorts de maintien (7', 8') sont assemblés par rivetage, collage ou similaire avec la douille (2') au niveau de la face de la bague amortissant les vibrations (1') orientée à l'opposé de éléments de construction (MP1', MP2').

8. Dispositif selon la revendication 2, **caractérisé en ce que** les ressorts de maintien (7', 8') sont assemblés avec une fixation de douille par agrafes entourant la paroi inférieure de la bague amortissant les vibrations (1') au niveau de la face de la bague amortissant les vibrations (1') orientée à l'opposé des éléments de construction (MP1', MP2').

9. Dispositif selon la revendication 1, **caractérisé en ce qu'**une butée (5) est prévue sur le goujon (3) pour la bague (4).

10. Dispositif selon la revendication 9, **caractérisé en ce que** cette butée est un anneau élastique (5) disposé dans une gorge (6) du goujon.

11. Dispositif selon la revendication 1 ou 2, **caractérisé en ce qu'**en cas de rotation du goujon (3), les extrémités des ressorts de maintien (7, 8 ; 7', 8') peuvent être écartées sur le côté des évidements (3-1, 3-2 ; 3-1', 3-2') par la partie sans évidements du goujon.

12. Dispositif selon la revendication 1 ou 2, **caractérisé en ce que** la douille (2, 2') présente un bord (2-1, 2-1') reposant sur la face supérieure de la bague amortissant les vibrations (1, 1') et sur lequel repose la tête du goujon (3-4) ou la bague de maintien (4).
